# DEMANDE DE BREVET EUROPEEN

(11) **EP 0 769 455 A1**
(43) Date de publication de la demande: **23.04.1997**
(21) Numéro de dépôt: 96402227.1
(22) Date de dépôt: 18.10.1996
(51) Int. Cl.: B65D 27/06

(54) **Enveloppe ré-utilisable**

(30) Priorité: 20.10.1995 FR 9512380
(71) Demandeur: Martineau, Patricia, 75011 Paris (FR)
(72) Inventeur: Martineau, Patricia, 75011 Paris (FR)
(74) Mandataire: Lejet, Christian

(57) **Abrégé**

L'invention concerne une enveloppe ré-utilisable formée à partir d'un flan (1) d'une seule pièce et comprenant un panneau avant (2) et un panneau arrière (3) reliés, à leurs bases respectives, par une ligne de pliage (4), le panneau avant (2) comportant des languettes latérales ( 5, 6) de solidarisation coopérant avec le panneau arrière (3) après pliage selon la ligne de pliage (4).

Selon l'invention, les panneaux avant et arrière (2, 3) comportent chacun un rabat (7, 8) de fermeture, les rabats (7, 8) étant reliés aux panneaux par des lignes de pliage (9, 10) situées sur les bords longitudinaux (11, 12) des panneaux (2, 3), la ligne de pliage (9) entre le rabat (7) du panneau externe (2) étant perforée, et les rabats (7, 8) ayant tous deux des hauteurs h1, h2 sensiblement égales.

## Description

La présente invention concerne une enveloppe ré-utilisable pour réexpédition, permettant à son destinataire de répondre à l'expéditeur sans changer d'enveloppe.

On connaît déjà des enveloppes ré-utilisables. Par exemple, on a décrit, dans le document FR-A-2 669 608, une enveloppe formée d'une feuille avant et d'une feuille arrière jointes suivant trois bords de l'enveloppe, une ouverture étant définie le long d'un quatrième bord, l'enveloppe comprenant un premier rabat formé sur l'une des feuilles, adjacent à l'ouverture et au moins un deuxième rabat prévu sur l'une des feuilles et espacé du premier rabat. On peut prévoir un troisième, un quatrième rabat, etc... Pour utiliser l'enveloppe pour la première fois, le premier rabat est tiré hors de l'intérieur de l'enveloppe, le contenu à poster est introduit dans l'enveloppe et le rabat est collé sur la feuille arrière de façon conventionnelle. Après utilisation de l'enveloppe, elle est déchirée le long d'une ligne adjacente, légèrement au-dessus du deuxième rabat. Le premier rabat est mis au rebut et le deuxième rabat est retiré de l'intérieur de l'enveloppe. On place ensuite le nouveau contenu dans l'enveloppe et on colle le deuxième rabat.

Un inconvénient d'une telle enveloppe est que l'enveloppe diminue de dimensions lorsqu'on l'utilise pour la deuxième fois. De plus, l'adresse du premier destinataire doit être placée d'abord à l'extrémité supérieure de l'enveloppe, puis l'adresse du deuxième doit être placée de nouveau à l'extrémité supérieure de la deuxième enveloppe plus petite. Mais, on sait que les Postes demandent aux utilisateurs d'utiliser des enveloppes de tailles normalisées comportant les adresses à des endroits déterminés de façon à pouvoir effectuer automatiquement le tri du courrier.

On a décrit, dans le document FR-A-2 546 133, une enveloppe pour réexpédition comportant un premier rabat de fermeture, pour l'expédition initiale, et un deuxième rabat pour le deuxième envoi, le deuxième rabat ayant une longueur suffisante pour recouvrir totalement la face avant de l'enveloppe lors du deuxième envoi. Du fait que le deuxième rabat doit avoir une longueur importante, il est replié sur lui-même avant d'être introduit à l'intérieur de l'enveloppe. De plus, le premier rabat comporte une ligne de pliage et la face avant de l'enveloppe est reliée au premier rabat par une ligne perforée distante de la ligne de pliage du premier rabat. Lorsque le destinataire ouvre l'enveloppe, il sépare le premier rabat par déchirure de la ligne perforée. Ainsi, un inconvénient d'une telle enveloppe est que la hauteur du deuxième rabat est telle qu'il est nécessaire de replier ce deuxième rabat à l'intérieur de l'enveloppe ce qui entraîne une sur-épaisseur et, de plus, nécessite une ligne perforée distincte de la ligne de pliage.

Le document FR-A-2 394 460 décrit aussi une enveloppe du genre de celle mentionnée ci-dessus.

Le document FR-A-2 009 334 concerne une enveloppe à fenêtre ré-utilisable et pouvant être utilisée avec un dispositif automatique d'insertion de lettres. L'enveloppe ne présente qu'un panneau utile, un rabat rentré permettant de cacher le timbre poste oblitéré pour un nouvel envoi.

Le document DE-A-40 37 529 décrit une enveloppe composée de trois sous-enveloppes distinctes utilisables successivement par découpage.

Le document GB-A-2 101 528 décrit une enveloppe à fenêtre à double rabat dont une partie est détachable pour la ré-expédition.

Le document FR-A-2 377 941 décrit une enveloppe pourvue de rabats découpables et collables sur trois côtés.

Aucun des documents cités ci-avant ne décrit une enveloppe ré-utilisable présentant une très grande simplicité.

Selon les documents US-A-3 270 948 et GB-A-1 146 535, le rabat vient se mettre sur la face avant de l'enveloppe. Il en résulte une enveloppe inversée par rapport à la normale, ce qui complique gravement l'utilisation de l'enveloppe, notamment au niveau des trieuses automatiques des postes et des pré-impressions souhaitables telles que le timbre.

Le document FR-A-0 587 677 prévoit une première ouverture manuelle selon un bord, le rabat restant alors en place. On constate immédiatement que cette première ouverture de l'enveloppe peut gravement endommager l'autre rabat à l'intérieur, ce qui compromet irrémédiablement toute ré-utilisation de l'enveloppe. Cette solution ne résout nullement le problème de l'occultation de l'affranchissement.

Un but de la présente invention est donc de fournir une enveloppe ré-utilisable qui soit simple à fabriquer et à utiliser et qui soit d'un coût peu élevé.

Un autre but de l'invention est de fournir une enveloppe ré-utilisable dont les adresses des expéditeurs et des destinataires puissent être pré-imprimées par le premier expéditeur.

Encore un autre but de l'invention est de fournir une enveloppe ré-utilisable qui puisse être pré-affranchie par le premier expéditeur.

Un quatrième but de l'invention est de fournir une enveloppe ré-utilisable qui ne requiert pas nécessairement de fenêtre de lecture.

A cet effet, l'invention concerne une enveloppe ré-utilisable formée à partir d'un flan d'une seule pièce et comprenant un panneau avant et un panneau arrière reliés, à leurs bases respectives, par une ligne de pliage ; le panneau avant comporte des languettes latérales de solidarisation coopérant avec le panneau arrière après pliage selon la ligne de pliage. Cette enveloppe est telle que les panneaux avant et arrière comportent chacun un rabat de fermeture, les rabats étant reliés aux panneaux par des lignes de pliage situées sur les bords longitudinaux des panneaux et ayant tous deux une hauteur sensiblement égale et, de préférence, suffisante pour pouvoir recouvrir le dispositif d'affranchissement.

Selon un mode de réalisation de l'invention, les rabats de fermeture comportent des zones de collage sur leur face interne.

De préférence, les panneaux sont tels que le panneau avant comporte l'adresse du destinataire sur sa face externe et le panneau arrière comporte l'adresse de l'expéditeur sur sa face externe, les adresses étant écrites ou imprimées de façon que l'adresse du destinataire soit dans un sens et l'adresse de l'expéditeur soit dans le sens opposé.

Selon un mode de réalisation de l'invention, l'adresse de l'expéditeur est pré-imprimée. Selon une variante de l'invention, un timbre poste est également pré-imprimé sur la face externe de chaque panneau, de façon que le timbre sur le panneau portant l'adresse du destinataire soit dans un sens et le timbre sur le panneau portant l'adresse de l'expéditeur soit dans le sens opposé.

Selon un autre mode de réalisation de l'invention, les languettes latérales de solidarisation comportent un adhésif du type permanent sur leurs faces externes.

Selon encore un autre mode de réalisation de l'invention, les languettes latérales de solidarisation comportent un adhésif sensible à la pression du type repositionnable sur leurs faces internes et externes.

Un autre mode de réalisation de l'invention est tel que le panneau avant comporte l'adresse du destinataire sur sa face externe et le panneau arrière comporte l'adresse de l'expéditeur sur sa face interne, les adresses étant écrites ou imprimées de façon à ce que l'adresse du destinataire et l'adresse de l'expéditeur soient dans le même sens.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle deux planches de dessins sont annexées sur lesquelles :

La Figure 1 est une vue de la face externe du flan permettant de réaliser une enveloppe ré-utilisable selon l'invention.

La Figure 2 est une vue de la face interne du flan représenté sur la Figure 1.

La Figure 3 est une vue en coupe de l'enveloppe selon l'invention, après solidarisation des panneaux avant et arrière du flan de la Figure 1.

La Figure 4 est une vue de l'enveloppe selon l'invention, après réception par le destinataire.

La Figure 5 est une vue en coupe de l'enveloppe selon l'invention avant sa ré-utilisation par le destinataire pour la retourner à l'expéditeur.

La Figure 6 est la vue selon la Figure 5 avant sa fermeture.

La Figure 7 est une vue de l'enveloppe une fois fermée et avant sa réexpédition.

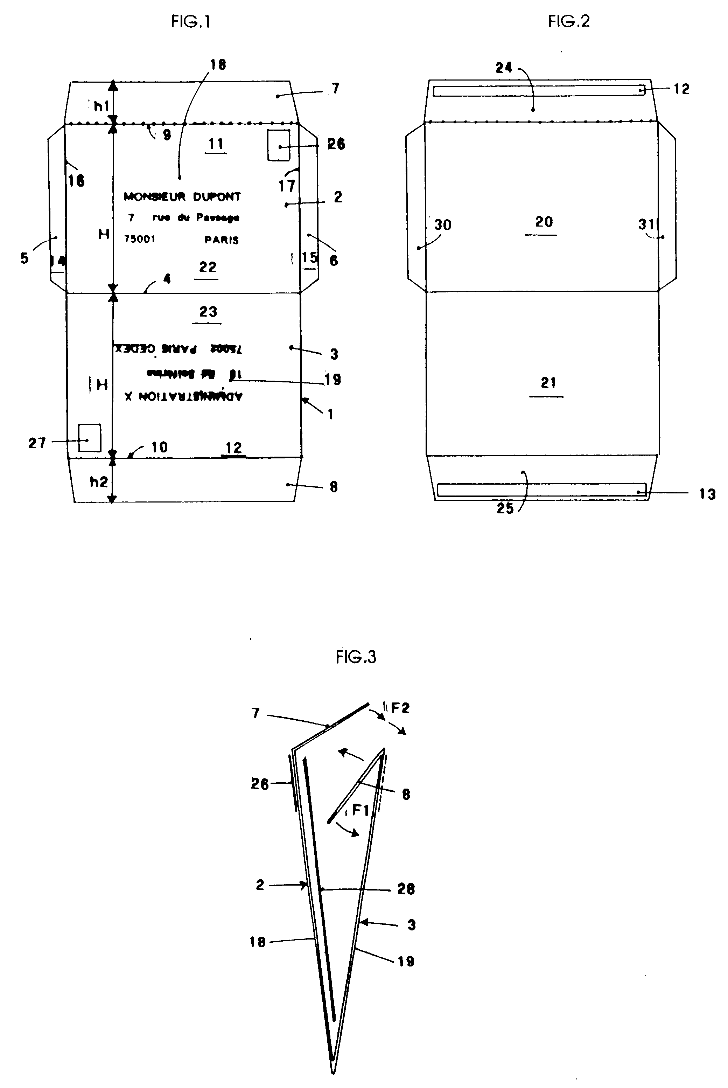

En référence maintenant aux dessins et, plus particulièrement à la Figure 1, on a représenté le flan 1 selon sa face externe. Ce flan 1 est, de préférence, d'une seule pièce et comprend un panneau avant 2 et un panneau arrière 3. Le panneau anneau avant 2 et le panneau arrière 3 sont reliés par leur base 4 commune. Cette base 4 constitue une ligne de pliage. Le panneau avant 2 comporte des languettes latérales de solidarisation 5 et 6. Lorsque le flan est replié selon la ligne de pliage, les languettes 5 et 6 coopèrent avec le panneau arrière 3. Le pliage est effectué de telle façon que les faces internes 20, 21 du flan 1 soient situées à l'intérieur de l'enveloppe. Les panneaux avant 2 et arrière 3 comportent chacun un rabat 7, 8 de fermeture. Ces rabats sont reliés aux panneaux avant et arrière respectivement par les lignes de pliage 9, 10 qui sont situées sur les bords longitudinaux 11, 12 des panneaux 2, 3. La ligne de pliage 9 entre le rabat 7 et le panneau avant 2 est, en outre, perforée ou pré-découpée.

Selon l'invention, la hauteur h1 du rabat 7 et la hauteur h2 du rabat 8 sont sensiblement égales entre elles et inférieures à la hauteur H d'un panneau. Ainsi, il n'est pas nécessaire de replier le rabat 8 selon sa hauteur h2 pour le faire pénétrer à l'intérieur de l'enveloppe lorsque celle-ci est repliée selon la ligne 4 de pliage. On évite ainsi une sur-épaisseur à l'intérieur de l'enveloppe solidarisée.

De préférence, les hauteurs h1 et h2 sont dimensionnées de manière à pouvoir recouvrir le dispositif d'affranchissement du courrier.

Sur la Figure 2, on a représenté le flan de la Figure 1 selon sa face interne. Chaque rabat 7, 8 comporte une zone de collage 12, 13 sur sa face interne 24, 25. Ces zones de collage 12, 13 sont positionnées de manière à ne pas recouvrir un dispositif d'affranchissement éventuel. Elles peuvent être constituées par un adhésif sensible à la pression du type repositionnable, l'adhésif étant protégé par une bande comportant un couche siliconée, permettant de découvrir l'adhésif quand on souhaite réaliser une solidarisation des rabats 7, 8. Par adhésif repositionnable, on entend un adhésif qui est suffisamment puissant pour permettre la solidarisation de deux éléments, mais suffisamment faible pour permettre la désolidarisation des éléments lorsqu'on effectue une traction sur les éléments. Un tel adhésif est, par exemple, un adhésif du genre de celui utilisé habituellement pour les rabats des enveloppes que l'on trouve dans le commerce. Cet adhésif peut être aussi du genre de celui utilisé pour le produit commercialisé sous la marque POST-IT ™ par la société 3M.

Selon le mode de réalisation représenté sur les Figures 1 à 7, les languettes 5 et 6 comportent un adhésif du type permanent sur leurs faces externes 14, 15. Lorsque l'enveloppe est repliée selon la ligne de pliage 4, les languettes sont repliées selon des lignes 16, 17, vers l'intérieur de l'enveloppe. Les languette sont alors solidarisées par l'adhésif et ce, de manière permanente.

De préférence, les panneaux avant 2 et 3 sont tels que le panneau avant 2 comporte l'adresse 18 du destinataire et le panneau arrière 3 comporte l'adresse 19 de l'expéditeur. Ces adresses sont placées sur les faces externes 22, 23 du flan 1. Les adresses peuvent être manuscrites ou imprimées, mais elles sont telles que l'adresse 18 du destinataire soit dans un sens et l'adresse 19 de l'expéditeur soit dans le sens opposé. Ainsi, lorsque l'enveloppe est repliée, les adresses sont dans le même sens sur la face recto et sur la face verso de l'enveloppe.

On peut prévoir que l'adresse de l'expéditeur soit pré-imprimée. Ainsi, si l'expéditeur est, par exemple, une administration ou une société importante, celle-ci fera pré-imprimer des flans en série et il ne restera plus qu'à écrire ou imprimer les adresses des différents destinataires.

On peut aussi prévoir qu'au moins un des panneaux comporte un dispositif d'affranchissement, tel un timbre poste 27 pré-imprimé, par exemple sur la face externe 23 du panneau 3 portant l'adresse 19 de l'expéditeur, soit sur les deux faces externes 22, 23 des panneaux 2, 3. Dans ce cas, les timbres 26, 27 sont placés ou pré-imprimés de façon à se situer dans le bord en haut à droite de chaque panneau avant et arrière 2, 3, lorsque l'enveloppe est repliée et prête à être utilisée.

Sur la Figure 3, on a représenté l'enveloppe selon l'invention, en coupe. L'enveloppe est telle que le rabat 8 du panneau 3 portant l'adresse 19 de l'expéditeur est replié selon le sens de la flèche F1, à l'intérieur de l'enveloppe. Le panneau 2 comporte un timbre 26 et le panneau 3 peut éventuellement comporter un timbre (non représenté sur la Figure 3) qui est masqué par le rabat 7. L'expéditeur insère l'objet 28 à envoyer entre les deux panneaux 2, 3, puis replie le rabat 7 selon le sens de la flèche F2, et le timbre 27, qui peut éventuellement se trouver sur le panneau 3 arrière, est alors masqué par le rabat 7.

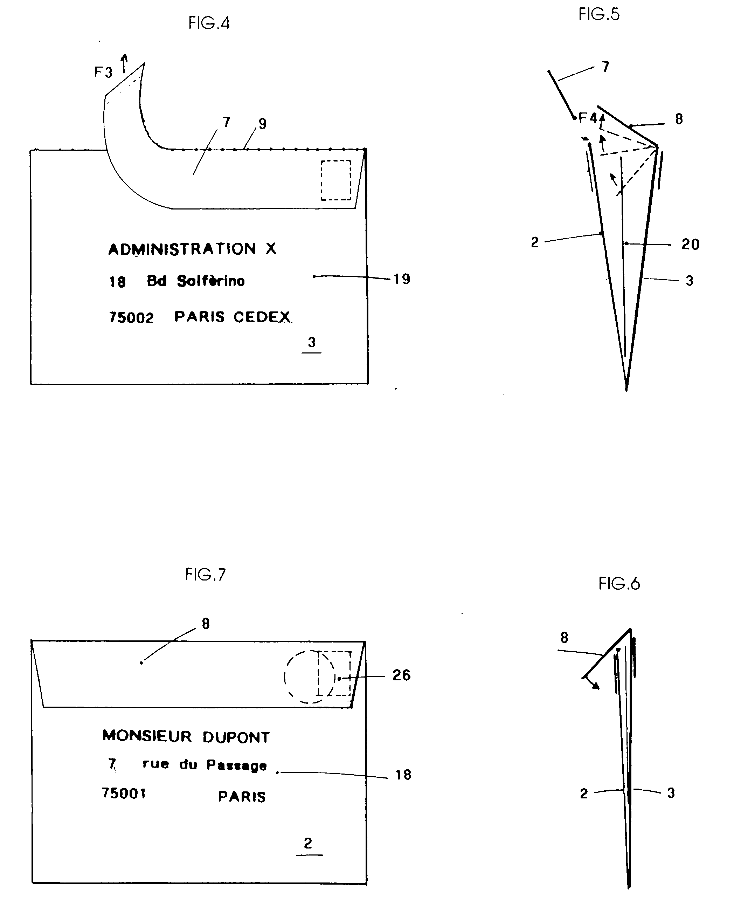

Sur la Figure 4, on a représenté l'enveloppe selon l'invention, après réception par le destinataire. Cette enveloppe est représentée vue de l'arrière. On voit donc que le panneau arrière 3 porte l'adresse 19 de l'expéditeur. Le destinataire qui va vouloir renvoyer l'enveloppe au premier expéditeur, va tirer dans le sens de la flèche F3 sur le rabat 7 -ou sur une éventuelle languette (non représentée) prévue à cet effet sur le rabat 7-, rabat 7 qui se détache selon la ligne de pliage perforée 9. Le destinataire va alors soulever le rabat interne 8 dans le sens de la flèche F4 pour le faire sortir de l'enveloppe et va introduire un nouvel objet 29 à expédier.

Comme on le voit sur les Figures 6 et 7, le rabat 8 vient ensuite se placer sur le timbre 26 oblitéré et lorsque le rabat 8 est solidarisé au moyen de l'adhésif sur le panneau 2, il masque entièrement ce timbre 26.

Pour mieux distinguer l'expéditeur du destinataire, en plus du fait que le timbre n'est visible que du côté comportant l'adresse du destinaire, la face du rabat qui est alors visible sur la face comportant l'adresse de l'expéditeur, peut comporter une indication imprimée du type 'Expéditeur :'.

Selon un autre mode de réalisation de l'invention, on peut aussi prévoir que les languettes de solidarisation 5, 6 comportent un adhésif du type repositionnable à la fois sur leurs faces externes 14, 15 et sur leurs faces internes 30, 31. De ce fait, lors de la ré-expédition de l'enveloppe, l'utilisateur va désolidariser l'enveloppe, à savoir les rabats 2, 3 des languettes 5, 6, va retourner les panneaux 2, 3 autour de la ligne de pliage 4, va re-solidariser les panneaux 2 et 3 par les faces internes des languettes 5, 6. Les autres manipulations sont les mêmes que celles décrites ci-dessus. Cependant un tel mode de réalisation de l'invention permet que le panneau avant 2 puisse comporter l'adresse 18 du destinataire sur sa face externe et que le panneau arrière 3 puisse comporter sur sa face interne l'adresse 19 de l'expéditeur, les adresses 18 et 19 ainsi que au moins un timbre étant imprimées dans le même sens. Ceci comporte un avantage supplémentaire qui est que, lors du premier envoi, l'adresse 19 de l'expéditeur se trouve à l'intérieur de l'enveloppe, et que, par pivotement des panneaux avant 2 et arrière 3 le long de la ligne 4 de pliage, lors de la ré-utilisation de l'enveloppe, l'adresse 19 du nouveau destinataire (ou précédent expéditeur) devient apparente à l'extérieur et l'adresse 18 du précédent destinataire (devenant le nouvel expéditeur) devient cachée du fait qu'elle se trouve alors à l'intérieur de l'enveloppe.

Le flan selon la présente invention peut être réalisé en toute matière imprimable, par exemple du papier, du carton, du papier plastifié ou même une structure fibreuse à base de matière synthétique ou tout autre matériau.

Enfin, l'enveloppe ré-utilisable selon cette invention peut présenter toute dimension appropriée.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini ci-après.

Par exemple, le panneau avant 2 peut être pourvue d'une fenêtre de lecture transparente au niveau de l'adresse du destinataire, laquelle n'a plus besoin alors de figurer sur le panneau. Dans ce cas, on pourra prévoir qu'une languette intérieure, sensiblement aux dimensions de la fenêtre, soit susceptible d'être rabattue sur la fenêtre au moment de la réexpédition de manière à masquer l'adresse.

## Revendications

1. Enveloppe ré-utilisable formée à partir d'un flan (1) d'une seule pièce et comprenant un panneau avant (2) et un panneau arrière (3) reliés, à leurs bases respectives, par une ligne de pliage (4), l'un (2) des dits panneaux comportant des languettes latérales (5, 6) de solidarisation coopérant avec l'autre panneau (3) après pliage selon la ligne de pliage (4), les panneaux avant et arrière (2, 3) comportant chacun un rabat (7, 8) de fermeture reliés aux dits panneaux avant et arrière (2, 3) par des lignes de pliage (9, 10) situées sur les bords longitudinaux (11, 12) des dits panneaux (2, 3), et comportant des zones de collage (12, 13) sur leurs faces internes (24, 25), le dit panneau avant (2) au moins étant prévu pour recevoir un dispositif d'affranchissement,
caractérisée en ce que
la ligne de pliage (9) entre le rabat (7) du panneau avant (2) est perforée ou pré-découpée ;
au moins la zone de collage (12) du rabat (7) du panneau avant (2) comportent un adhésif sensible à la pression du type repositionnable;
au moins le rabat (8) du panneau arrière (3) présente une hauteur (h2) suffisante pour recouvrir le dispositif d'affranchissement du panneau avant (2).

2. Enveloppe selon la revendication 1, caractérisée en ce que le rabat (7) du panneau avant (2) présente une hauteur suffisante (h1) pour recouvrir le dispositif d'affranchissement du panneau arrière (3) lorsque celui-ci comporte un dispositif de pré-affranchissement.

3. Enveloppe selon la revendication 1 ou 2, caractérisée en ce que les dites zones de collage (12, 13) sont positionnées de manière à ne pas recouvrir un dispositif d'affranchissement.

4. Enveloppe selon l'une quelconque des revendications précédentes, caractérisée par le fait que le panneau avant (2) comporte l'adresse (18) du destinataire sur sa face externe et que le panneau arrière (3) comporte l'adresse(19) de l'expéditeur sur sa face externe, les adresses étant manuscrites ou imprimées de façon que l'adresse (18) du destinataire soit dans un sens et l'adresse (19) de l'expéditeur soit dans le sens opposé.

5. Enveloppe selon l'une quelconque des revendications précédentes, caractérisée par le fait que l'adresse (19) de l'expéditeur est pré-imprimée.

6. Enveloppe selon l'une quelconque des revendications précédentes, caractérisée par le fait qu'un timbre poste (26, 27) est pré-imprimé sur la face externe de chaque panneau (2, 3), de façon que le timbre (26) sur le panneau portant l'adresse (18) du destinataire soit dans un sens et le timbre (27) sur le panneau (3) portant l'adresse (19) de l'expéditeur soit dans le sens opposé.

7. Enveloppe selon l'une quelconque des revendications précédentes, caractérisée par le fait que les languettes latérales (5, 6) de solidarisation comportent un adhésif du type permanent sur leurs faces externes (14, 15).

8. Enveloppe selon l'une quelconque des revendications précédentes, caractérisée par le fait que les languettes latérales (5, 6) de solidarisation comportent un adhésif sensible à la pression du type repositionnable sur leurs faces externes (14, 15) et internes (30, 31).

9. Enveloppe selon l'une quelconque des revendications précédentes, caractérisée par le fait que le panneau avant (2) comporte l'adresse (18) du destinataire sur sa face externe et le panneau arrière (3) comporte l'adresse (19) de l'expéditeur sur sa face interne, les adresses étant écrites ou imprimées de façon à être dans le même sens.
